# EUROPEAN PATENT APPLICATION

(11) **EP 4 332 755 A1**
(43) Date of publication of application: **06.03.2024**
(21) Application number: 22192666.0
(22) Date of filing: 29.08.2022
(51) Int. Cl.: G06F 8/61, G06F 8/65, G06F 9/455

(54) **SYSTEMS AND METHODS FOR MASS-DEPLOYMENT OF SERVICES FROM A SINGLE POINT OF ACCESS**

(71) Applicant: Continental Automotive Technologies GmbH, 30165 Hannover (DE)
(72) Inventor: Sadovan, Iulian, 81737 München (DE); Hashem, Mohammed, 81737 München (DE); Ilic, Nenad, 81737 München (DE)
(74) Representative: Continental Corporation

(57) **Abstract**

In order to improve the mass-deployment of services from a single point of access to a large number of remote hardware systems (22), the invention proposes a computer-implemented remote orchestration method for performing a maintenance task of a remote hardware system (22). The remote hardware system (22), e.g. a vehicle (24), has remote orchestrator control (ROC) means (36) and at least one SoC (26). The SoC (26) includes a service orchestrator agent node (28) and is configured for executing a software service. The ROC means (36) receive a command message via a telecommunication network. The command message includes indications of a maintenance task and at least one affected SoC (26) on which the maintenance task is to be performed. In response to receiving the command message, the ROC means (32) sends an instruction message to a service orchestrator server node (34), which in turn, sends a drive message within the remote hardware system (22) to each affected SoC (26). The drive message causes each affected service orchestrator agent node (28) to perform the maintenance task on the respective affected SoC (26).

## Description

### TECHNICAL FIELD

The invention relates to computer-implemented methods for performing maintenance tasks, such as deploying, updating or deleting software services, on remote hardware systems. The invention further relates to systems adapted for performing these methods.

### BACKGROUND

In general, there is a challenge to distribute software-implemented services to a large number of systems through a single point of access. Automotive service developers increasingly deploy, control and monitor services to/on a remote distributed loT system, such as a vehicle. The remote distributed system usually comprises a cloud infrastructure that is connected to the loT hardware (HW). The loT HW includes a plurality of network connected systems on a chip (SoC) that may perform various tasks in the remote system, such as, in case of a vehicle, engine control, navigation, entertainment, etc.

Container orchestrators, e.g. Kubernetes, are known and designed for deploying services on a remote distributed system that is connected via a computer network. A central control unit that is typically called control plane provides various interfaces allowing the service developer to instruct the orchestrator. The use of container orchestrators is known from general cloud and loT solutions, but is not yet applied in the automotive industry.

As a result, the systems used today usually require direct access of the service developer to multi-SoC loT HW and usually allow deployment to only a single SoC of the entire network. In other words, updating the SoCs requires that each SoC be updated sequentially and individually, which is cumbersome and a waste of transmission infrastructure resources.

### SUMMARY OF THE INVENTION

It is the object of the invention to provide improved measures for mass-deployment of services from a single point of access to a large number of remote loT hardware systems.

The invention provides a computer-implemented remote orchestration method for performing a maintenance task of a remote hardware system, the remote hardware system having remote orchestrator control (ROC) means, service orchestrator server node and at least one SoC that includes a service orchestrator agent node and is configured for executing a software service, the method comprising:
a) the ROC means receiving a command message via a telecommunication network, the command message being indicative of a maintenance task and at least one affected SoC on which the maintenance task is to be performed, and sending an instruction message that is indicative of the maintenance task and the at least one affected SoC to the service orchestrator server node;
b) the service orchestrator server node, in response to receiving the instruction message, sending a drive message within the remote hardware system to the service orchestrator agent node of each affected SoC, wherein the drive message causes each affected service orchestrator agent node to perform the maintenance task on the respective affected SoC.

Preferably, in correspondence with the maintenance task, each affected service orchestrator agent node pulls software service data via a telecommunication network from an application container registry.

Preferably, the maintenance task is selected from a group of maintenance tasks that consists of "deploy", "delete" and "update", wherein in step b), if the maintenance task is "deploy" or "update", each affected service orchestrator agent node pulls the software service data via the telecommunication network from the application container registry

Preferably, in correspondence with the maintenance task, software service data is installed/removed as the software service on the affected SoC by the affected service orchestrator agent node.

Preferably, the maintenance task is selected from a group of maintenance tasks that consists of "deploy", "delete" and "update", wherein in step b), if the maintenance task is "delete", each affected service orchestrator agent node removes the software service from the affected SoC.

Preferably, the remote hardware system includes a ROC-SoC on which the remote orchestrator control means and the service orchestrator server node are executed.

Preferably, the application container registry is part of a cloud infrastructure system.

Preferably, the remote hardware system has a predetermined unique identifier (UID), wherein the command message includes the UID, and the ROC means does not send an instruction message, if the ROC means determines that the UID included in the command message does not match the UID of the remote hardware system.

The invention provides a computer-implemented method for distributing and performing maintenance tasks of a plurality of remote hardware systems by a single cloud infrastructure system, that comprises a telecommunication interface and an application container registry, the method comprising:
a) the telecommunication interface sending a command message via a telecommunication network to each remote hardware system, the command message being indicative of a maintenance task and at least one affected SoC on which the maintenance task is to be performed; and
b) the application container registry receiving a pull message from each remote hardware system that received the command message and sending software service data in correspondence with the pull message to the respective remote hardware system.

Preferably, the cloud infrastructure system, upon detecting a change in the application container registry, causes the telecommunication interface to send the command message.

Preferably, the application container registry automatically or a person manually classifies the change as "deploy", "delete" or "update", and the maintenance task is chosen accordingly.

The invention provides a computer program, a computer readable storage medium or a data carrier signal that comprises instructions, that, upon execution by a remote hardware system having remote orchestrator control means, service orchestrator server node and at least one SoC that includes a service orchestrator agent node and is configured for executing a software service, cause the system to perform a previously described method.

The invention provides a computer program, a computer readable storage medium or a data carrier signal that comprises instructions, that, upon execution by a cloud infrastructure system, that comprises a telecommunication interface and an application container registry, cause the cloud infrastructure system to perform a previously described method.

The invention provides a remote hardware system, preferably a vehicle, that comprises means that are configured to perform a previously described method.

The invention provides a cloud infrastructure system that comprises means that are configured to perform a previously described method.

The invention provides a computer-implemented method for performing a maintenance task of a remote hardware system by a service single cloud infrastructure system, wherein the remote hardware system has remote orchestrator control (ROC) means, service orchestrator server node and at least one SoC that includes a service orchestrator agent node and is configured for executing a software service, wherein the cloud infrastructure system comprises a telecommunication interface and an application container registry, wherein the method comprises:
a) the cloud telecommunication interface sending a command message via a telecommunication network to each remote hardware system, the command message being indicative of a maintenance task and at least one affected SoC on which the maintenance task is to be performed;
b) the ROC means, in response to receiving the command message from step a), sending an instruction message that is indicative of the maintenance task and the at least one affected SoC to the service orchestrator server node;
c) the service orchestrator server node, in response to receiving the instruction message of step b), sending a drive message within the remote hardware system to the service orchestrator agent node of each affected SoC, wherein the drive message causes each affected service orchestrator agent node to perform the maintenance task on the respective affected SoC; and
d) the application container registry, when receiving a pull message from a remote hardware system, sending software service data in correspondence with the pull message to the respective remote hardware system.

It is noted that this method is a combination of both the previously described methods and may have any of the advantageous embodiments as previously described for each method.

The design proposes a system component that is called remote orchestrator controller (ROC). The ROC may execute on one of the SoCs of the system hardware. The same SoC may also execute an interface component for communicating with the cloud infrastructure, e.g. Greengrass provided by AWS. The interface component provides a communication channel to the cloud infrastructure.

The same SoC may also execute a service orchestrator, e.g. k3s that is a Kubernetes derivative for services. The service orchestrator may deploy services on other SoCs connected to the ROC-SoC. The service orchestrator cannot be controlled remotely from the cloud infrastructure. This is exclusively done by the ROC.

The ROC preferably uses the interface component to communicate with the cloud infrastructure. The ROC issues commands the service orchestrator.

The service orchestrator preferably deploys services on a distributed system connected via a computer network, managed by its central control unit called control plane. The control plane may provide the interfaces for a user to instruct it.

The service developer transmits to the ROC an instruction/command to "deploy" newly developed or updates services from cloud infrastructure through the loT communication channel.

The ROC then receives the "deploy" command and transmits the necessary deployment instructions to the service orchestrator via the respective user interfaces. The ROC may alternatively or additionally execute other commands like "delete" a service or "update" a service.

The service orchestrator may execute the applied instructions/commands, preferably locally on the respective SoC by the ROC, on behalf of the service developer who only accesses the system from the single entry point in the cloud infrastructure. The services are then deployed, deleted or updated on the specified SoCs. The service orchestrator enables reduction of complexity by directly accessing deploying services to multiple SoCs via a single entry point in the cloud infrastructure.

With this approach complex multi-SoC systems like vehicles can be treated as a single loT device, i.e. accessed via a single entry point in the cloud infrastructure. Furthermore, automated development and deployment workflows for multi-SoC systems require less effort.

### BRIEF DESCRIPTION OF THE DRAWINGS

Embodiments of the invention are described in more detail with reference to the accompanying schematic drawings.
Fig. 1 depicts an embodiment of a system for software maintenance; and
Fig. 2 depicts an embodiment of a method for software maintenance.

### DETAILED DESCRIPTION OF EMBODIMENT

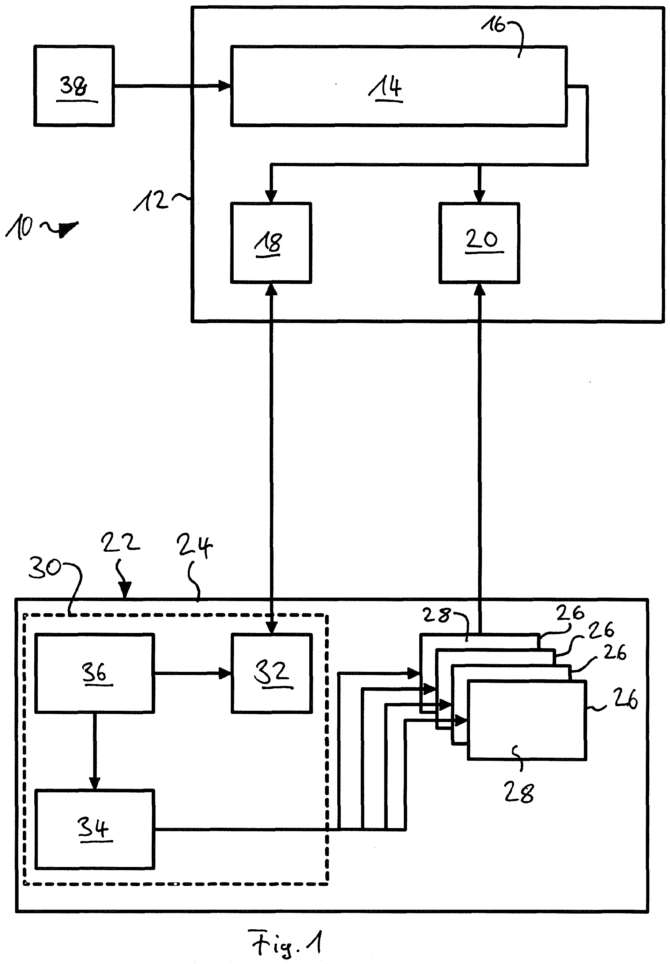

Referring to Fig. 1, a system 10 for software maintenance comprises a cloud infrastructure system 12.

The cloud infrastructure system 12 comprises a software pipeline 14. The software pipeline 14 is configured to receive source code and output software service data that can be executed by a system on a chip (SoC). The software pipeline 14 is preferably configured as a build/test/deployment pipeline 16.

The cloud infrastructure system 12 comprises a cloud telecommunication interface 18. The cloud telecommunication interface 18 is configured for communicating with remote hardware systems via a telecommunication network. The cloud telecommunication interface 18 is operatively coupled to the software pipeline 14, such that the cloud telecommunication interface 18 can be controlled by the software pipeline 14.

The cloud infrastructure system 12 comprises an application container registry 20. The application container registry 20 is operatively coupled to the software pipeline 14 and configured to receive software service data therefrom. The application container registry 20 stores the software service data in containers that are ready to be deployed.

The system 10 comprises at least one remote hardware system 22. The remote hardware system 22 may be a vehicle 24. A plurality of remote hardware systems 22 that are vehicles 24 may also be referred to as a fleet.

The remote hardware system 22 comprises a plurality of SoCs 26 that provide various functions. In case of the remote hardware system 22 being a vehicle 24, the SoCs 26 may provide typical vehicle functions, such as engine control, brake control, entertainment, battery management, cruise control, park distance control, etc. Each SoC 26 comprises a service orchestrator agent node 28. The service orchestrator agent node 28 is configured to pull and receive software service data from the application container registry 20 upon receiving a certain drive message.

The remote hardware system 22 comprises a remote orchestrator controller (ROC) SoC 30. Preferably, the remote hardware system 22 comprises only one ROC-SoC 30.

The ROC-SoC 30 comprises a remote telecommunication interface 32 that is configured to communicate with the cloud telecommunication interface 18. The ROC-SoC 30 comprises a service orchestrator server node 34 that is configured to drive the service orchestrator agent nodes 28. The ROC-SoC 30 comprises a remote orchestrator control (ROC) means 36. The ROC means 36 is operatively coupled to the remote telecommunication interface 32 and the service orchestrator server node 34. Preferably, the ROC means 36, the service orchestrator server node 34, and/or the remote telecommunication interface 32 are part of the same ROC-SoC 30.

Referring to Fig. 1, a method for deploying a software service to a large number of remote hardware systems 22 is described in more detail. The method is exemplified by reference to deploying a software service to a fleet of vehicles 24.

A service developer develops source code that is committed to a source code repository 38. The commit automatically triggers the cloud infrastructure system 12 to cause the software pipeline 14 to generate executable software service data. Upon completion of the build (and possible testing), the software service data is stored in the application container registry 20 as a container ready to be deployed.

Furthermore, the cloud telecommunication interface 18 sends a command message to the fleet of vehicles 24. The command message includes a maintenance task "deploy" and an indication to which SoC 26 of the remote hardware system 22 the software service data is to be deployed. It is also possible to store the command message for retrieval, e.g. when a certain vehicle 24 that should receive the command message is currently off-line.

The remote telecommunication interface 32 receives the command message via a telecommunication network and forwards the command message to the ROC-SoC 30. The ROC-SoC 30 receives the command message and generates an instruction message for the service orchestrator server node 34. The instruction message includes the maintenance task "deploy" and the indication of the affected SoC 26. The instruction message is sent to the service orchestrator server node 34.

In response to receiving the instruction message, the service orchestrator server node 34 generates a drive message for the affected SoC 26, and only for the affected SoC 26. The drive message indicates which software service data are to be pulled from the application container registry 20 based on the indication of the affected SoC 26 and optionally also the maintenance task. The drive message is sent to the affected SoC 26.

In response to receiving the drive message, the service orchestrator agent node 28 of the affected SoC 26 sends a pull message to the application container registry 20. The pull message includes an indication, which software service data are to be pulled from the application container registry 20, based on the drive message.

In response to receiving the pull message, the application container registry 20 locates and sends the requested software service data to the affected SoC 26. The service orchestrator agent node 28 processes the software service data and installs them as a software service on the affected SoC 26.

Some variants to this process are possible. For example, the generation and sending of the initial command message may be manually operated instead of automatically. Furthermore, it is possible for the command message to include a unique identification (UID) of each of the remote hardware systems 22 that are to receive the software service data. In this case, the ROC-SoC 30 does not generate an instruction message, if the UID of the command message does not match the UID assigned to the remote hardware system 22.

In a variant where the command message includes the maintenance task "update", the process is similar to the "deploy" process. In contrast to the "deploy" process in the "update" process, the service orchestrator agent node 28 updates the software service that is already installed on the affected SoC 26 with the software service data.

In another variant the command message may be issued with the maintenance task "delete". In this case, the instruction message and the drive message are generated to cause the service orchestrator agent node 28 to remove the software service from the affected SoC 26.

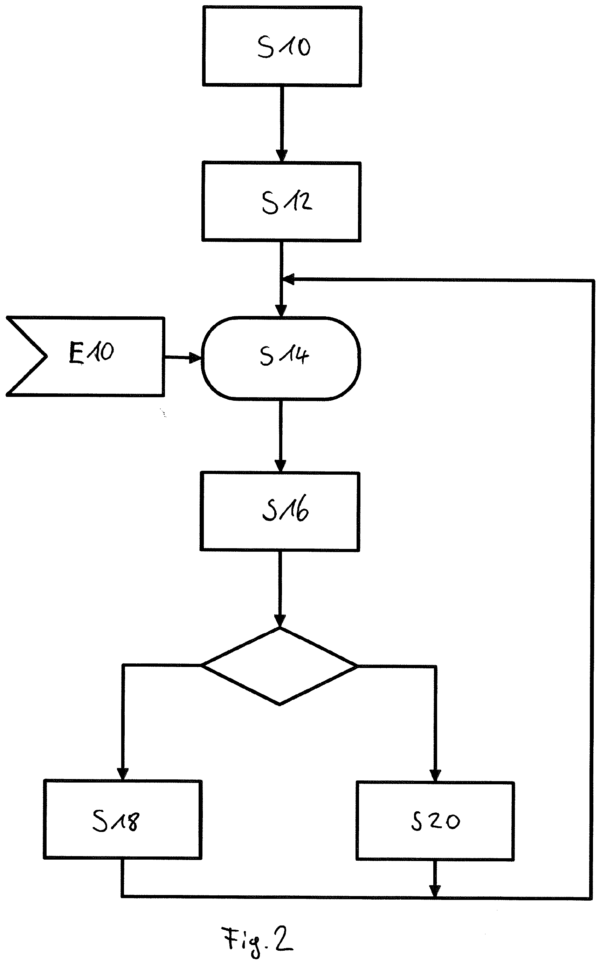

Referring to Fig. 2, the functioning of the ROC means 36 is described in more detail. After start-up S10, the ROC means 36 controls the remote telecommunication interface 32 to register with the cloud telecommunication interface 18 in a registering step S12. Thus, the cloud telecommunication interface 18 is able to determine, which remote hardware systems 22, i.e. which vehicles 24 of the fleet, are available for communication.

Subsequently, the ROC means 36 goes in a sleep mode S14 for energy conservation. When a command message is received by the remote telecommunication interface 32, an event E10 is generated and the ROC means 36 is woken up. The event E10 includes the command message from the cloud infrastructure system 12.

The command message is processed in a processing step S16 by the ROC means 36. Therein the ROC means 36 determines whether the UIDs of the command message and the remote hardware system 22 match (if applicable). If so, the ROC means 36 determines which SoCs 26 are affected with which maintenance task. If the command message includes such maintenance tasks, then the ROC means 36 generates the corresponding instruction message for the service orchestrator server node 34 and transfers the instruction message to the server orchestrator server node 34 in an instruction step S18; otherwise, no instruction message is created in the no-generation step S20. After any of the instruction or generation steps S18, S20, the ROC means 36 returns to the sleep mode S14 until interrupted by another event.

With this method and system the software service of individual SoCs 26 of a large fleet of remote hardware systems 22 can be maintained from a single point of access via cloud infrastructure system 12. Each remote hardware system 22, e.g. a vehicle 24, communicates with the cloud infrastructure system 12 via a remote orchestrator controller SoC 30 that uses a different channel for communication with the cloud infrastructure system 12 as the service orchestrator agent nodes 34 with the application container registry 20. Changes in the application container registry 20 can be distributed to the entire fleet without individually contacting each remote hardware system 22.

### REFERENCE SIGNS

- 10: system
- 12: cloud infrastructure system
- 14: software pipeline
- 16: build/test/deployment pipeline
- 18: cloud telecommunication interface
- 20: application container registry
- 22: remote hardware system
- 24: vehicle
- 26: system-on-a-chip (SoC)
- 28: service orchestrator agent node
- 30: remote orchestrator controller (ROC) SoC
- 32: remote telecommunication interface
- 34: service orchestrator server node
- 36: remote orchestrator control (ROC) means
- 38: source code repository

- E10: event

- S10: start-up
- S12: registering step
- S14: sleep mode
- S16: processing step
- S18: instruction step
- S20: no-generation step

## Claims

1. A computer-implemented remote orchestration method for performing a maintenance task of a remote hardware system (22), the remote hardware system (22) having remote orchestrator control (ROC) means (36), service orchestrator server node (34) and at least one SoC (26) that includes a service orchestrator agent node (28) and is configured for executing a software service, the method comprising:
a) the ROC means (36) receiving a command message via a telecommunication network, the command message being indicative of a maintenance task and at least one affected SoC (26) on which the maintenance task is to be performed, and sending an instruction message that is indicative of the maintenance task and the at least one affected SoC (26) to the service orchestrator server node (34);
b) the service orchestrator server node (34), in response to receiving the instruction message, sending a drive message within the remote hardware system to the service orchestrator agent node (28) of each affected SoC (26), wherein the drive message causes each affected service orchestrator agent node (28) to perform the maintenance task on the respective affected SoC (26).

2. The method according to claim 1, **characterized in that**, in correspondence with the maintenance task, each affected service orchestrator agent node (28) pulls software service data via a telecommunication network from an application container registry (20).

3. The method according to claim 2, **characterized in that**, the maintenance task is selected from a group of maintenance tasks that consists of "deploy", "delete" and "update", wherein in step b), if the maintenance task is "deploy" or "update", each affected service orchestrator agent node (28) pulls the software service data via the telecommunication network from the application container registry (20)

4. The method according to any of the preceding claims, **characterized in that**, in correspondence with the maintenance task, software service data is installed/removed as the software service on the affected SoC (26) by the affected service orchestrator agent node (28).

5. The method according to any of the preceding claims, **characterized in that**, the maintenance task is selected from a group of maintenance tasks that consists of "deploy", "delete" and "update", wherein in step b), if the maintenance task is "delete", each affected service orchestrator agent node (28) removes the software service from the affected SoC (26).

6. The method according to any of the preceding claims, **characterized in that**, the remote hardware system (22) includes a ROC-SoC (30) on which the ROC means (36) and the service orchestrator server node (34) are executed.

7. The method according to any of the preceding claims, **characterized in that**, the application container registry (20) is part of a cloud infrastructure system (12).

8. The method according to any of the preceding claims, **characterized in that**, the remote hardware system has a predetermined unique identifier (UID), wherein the command message includes the UID, and the ROC means (36) does not send an instruction message, if the ROC means (36) determines that the UID included in the command message does not match the UID of the remote hardware system (22).

9. A computer-implemented method for distributing and performing maintenance tasks of a plurality of remote hardware system (22)s by a single cloud infrastructure system (12), that comprises a cloud telecommunication interface and an application container registry (20), the method comprising:
a) the cloud telecommunication interface sending a command message via a telecommunication network to each remote hardware system (22), the command message being indicative of a maintenance task and at least one affected SoC (26) on which the maintenance task is to be performed; and
b) the application container registry (20) receiving a pull message from each remote hardware system (22) that received the command message and sending software service data in correspondence with the pull message to the respective remote hardware system (22).

10. The method according to claim 9, **characterized in that**, the cloud infrastructure system (12), upon detecting a change in the application container registry (20), causes the cloud telecommunication interface to send the command message.

11. The method according to claim 10, **characterized in that**, the application container registry (20) automatically or a person manually classifies the change as "deploy", "delete" or "update", and the maintenance task is chosen accordingly.

12. A computer program, a computer readable storage medium or a data carrier signal that comprises instructions, that, upon execution by a remote hardware system (22) having remote orchestrator control means, service orchestrator server node (34) and at least one SoC (26) that includes a service orchestrator agent node (28) and is configured for executing a software service, cause the system to perform a method according to any of the claims 1 to 8.

13. A computer program, a computer readable storage medium or a data carrier signal that comprises instructions, that, upon execution by a cloud infrastructure system (12), that comprises a cloud telecommunication interface and an application container registry (20), cause the cloud infrastructure system (12) to perform a method according to any of the claims 9 to 11.

14. A remote hardware system (22), preferably a vehicle (24), that comprises means that are configured to perform a method according to any of the claims 1 to 8.

15. A cloud infrastructure system (12) that comprises means that are configured to perform a method according to any of the claims 9 to 11.
